# EUROPEAN PATENT SPECIFICATION

(11) **EP 2 946 300 B1**
(45) Date of publication and mention of the grant of the patent: **31.01.2018**
(21) Application number: 13881439.7
(22) Date of filing: 02.04.2013
(51) Int. Cl.: G06F 13/40

(54) **SATA INITIATOR ADDRESSING AND STORAGE DEVICE SLICING**
SATA-INITIATOR-ADRESSIERUNG UND AUFTEILUNG EINER SPEICHERVORRICHTUNG
ADRESSAGE D'INITIATEURS SATA ET TRANCHAGE DE DISPOSITIFS DE STOCKAGE

(43) Date of publication of application: 25.11.2015
(73) Proprietor: Hewlett Packard Enterprise Development LP, Houston, TX 77070 (US)
(72) Inventor: SABOTTA, Michael L, Houston, Texas 77070 (US); NATRAJAN, Balaji, Houston, Texas 77070 (US); LADA, Henry F, Jr., Houston, Texas 77070 (US); HANNA, Charles R, Houston, Texas 77070 (US)
(74) Representative: Holt, Daniel Richard
(86) International application number: PCT/US2013/035038
(87) International publication number: WO 2014/163627

(56) References cited:
- EP-A2- 2 423 823
- US-A1- 2006 101 171
- US-A1- 2007 206 496
- US-A1- 2008 155 145
- US-A1- 2009 007 155
- US-A1- 2009 210 639
- US-A1- 2010 185 830
- US-A1- 2011 107 002

## Description

### BACKGROUND

Serial attached small computer system interface (SAS) is a communication protocol for enabling communication between computing devices. SAS devices include initiators, targets, and expanders. Initiators are devices that can initiate SAS requests, and targets are storage devices that receive and process the SAS requests from initiators. Expander devices are devices that can facilitate connections between multiple targets and a single initiator. The SAS protocol utilizes a point-to-point bus topology; therefore, each target is connected by a dedicated link to an initiator unless an expander is used. US2007/0206496 discloses a SAS host coupled to a SAS device via a SAS expander and a data traffic modification device. In some embodiments, the SAS device may be replaced by a SATA device. The SAS host may be a SATA host if the configuration also includes a SATA device.

### BRIEF DESCRIPTION OF THE DRAWINGS

The following detailed description references the drawings, wherein:
FIG. 1 is a block diagram of an example expander device for providing SATA initiator addressing and storage device slicing;
FIG. 2 is a block diagram of an example system for providing SATA initiator addressing and storage device slicing;
FIG. 3 is a block diagram of an example modular system for providing SATA initiator addressing and storage device slicing;
FIG. 4 is a flowchart of an example method for execution by an expander device for providing SATA initiator addressing and storage device slicing;
FIG. 5 is a flowchart of an example method for execution by an expander for providing storage device slicing and iterative SATA initiator addressing and processing;
FIG. 6 is a flowchart of an example method for execution by an expander for providing SATA initiator time sharing of storage device slices; and
FIG. 7 is a block diagram showing an example non-transitory, computer-readable medium that stores instructions for providing SATA initiator addressing and storage device slicing.

### DETAILED DESCRIPTION

As discussed above, SAS configurations allow for SAS storage devices to be interfaced with SAS initiators. For example, some dedicated server platform applications have a dedicated storage device but only use a small portion of the total capacity of the storage device. The server platform generally includes an array controller that supports a large amount of storage capacity, which exceeds the storage requirements of the hosted application. Accordingly, the server platform may not be optimized to allow multiple server nodes to be supported by a smaller storage device.

Various approaches focusing on different aspects of storage optimization have been attempted with diverse results. For example, a Fibre Channel Storage Area Network (SAN) may be booted from to relocate the storage to a consolidated location. In this example, the dedicated infrastructure introduces a cost structure greater than an order of magnitude higher to the host. In another example, Internet Small Computer System Interface (iSCSI) SANs that layer on top of the data network may allow the cost structure to be competitive with a single boot drive, but the scale of this approach introduces uncomfortably large failure domains. In yet another example, networking booting on protocols such as Preboot Execution Environment (PXE) and Network File System (NFS) can achieve reasonable cost structures with good manageability but limit the breadth of supportable operating systems. In yet another example, a proprietary fabric may be provided that presents a standard storage controller on the host side and subdivides storage devices on the other side of the fabric.

Example embodiments disclosed herein provide an expander for SATA initiator addressing and storage device slicing. For example, in some embodiments, an expander device configures an initiator SAS address to uniquely identify a SATA initiator, where the SATA initiator is associated with a target address of a SATA storage bridge. The STP storage bridge may be configured to associate the initiator SAS address with a drive slice of an SATA storage device. At this stage, a SATA request including a storage command and a logical block addressing (LBA) address may be received from the SATA initiator. In response to the SATA request, the initiator SAS address may be inserted into the SATA request before an STP connection is established to send the SATA request to the target address. After the SATA request is received at the target address, the LBA address may be offset based on the initiator SAS address.

In this manner, example embodiments disclosed herein allow multiple SATA initiators to share a single SATA storage device. Specifically, by assigning an initiator SAS address to a SATA initiator, the SATA requests may be intercepted by an expander and routed to an appropriate drive slice of the shared SATA storage device. Because the routing is abstracted by the expander, the SATA initiator and SATA storage device may operate in a conventional fashion without any knowledge of the initiator SAS address assignment.

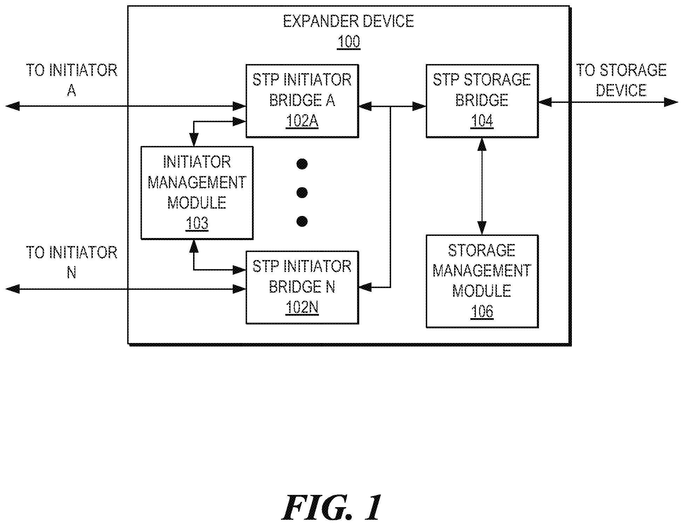

Referring now to the drawings, FIG. 1 is a block diagram of an example expander device 100 for providing SATA initiator addressing and storage device slicing. The example expander device 100 may be implemented in a server computing device such as a blade server, a rack server, a notebook computer, a desktop computer, or any other electronic device suitable for providing SATA initiator addressing and storage device slicing. In the embodiment of FIG. 1, expander device 100 includes STP initiator bridges (e.g., STP initiator bridge A 102A, STP initiator bridge N 102N, etc.), initiator management module 103, STP storage bridge 104, and storage management module 106.

Each STP initiator bridge (e.g., STP initiator bridge A 102A, STP initiator bridge N 102N, etc.) may be configured to communicate with an associated initiator. Specifically, an STP initiator bridge (e.g., STP initiator bridge A 102A, STP initiator bridge N 102N, etc.) provides a bridging function between an initiator and a SATA target such as a storage device. For example, the STP initiator bridge (e.g., STP initiator bridge A 102A, STP initiator bridge N 102N, etc.) may be configured to initiate an STP connection with STP storage bridge 104 and then pass SATA protocol to the STP storage bridge 104 via the STP connection.

Initiator management module 103 may configure STP initiator bridges (e.g., STP initiator bridge A 102A, STP initiator bridge N 102N, etc.) with operating parameters. Specifically, initiator management module 103 may assign a SAS address to each of the STP initiator bridges (e.g., STP initiator bridge A 102A, STP initiator bridge N 102N, etc.). In this case, the SAS address acts as a unique identifier for a corresponding initiator connected to each STP initiator bridge (e.g., STP initiator bridge A 102A, STP initiator bridge N 102N, etc.). Further, initiator management module 103 may associate a target address with each of the STP initiator bridges (e.g., STP initiator bridge A 102A, STP initiator bridge N 102N, etc.), where the target address is the destination of SATA protocol forwarded by the STP initiator bridges (e.g., STP initiator bridge A 102A, STP initiator bridge N 102N, etc.). In this example, the target address identifies STP storage bridge 104 as the destination for the SATA protocol.

Once configured by initiator management module 103, the STP initiator bridge (e.g., STP initiator bridge A 102A, STP initiator bridge N 102N, etc.) may inject its assigned SAS address into SATA requests received from the associated initiator. The SATA request may include a SATA command and, in some cases, a logical block addressing (LBA) address. The SAS address is injected into the SATA request so that, after the SATA request is forwarded, STP storage bridge 104 can identify the initiator that initiated the SATA request.

STP storage bridge 104 may be configured to communicate with an associated storage device. Specifically, STP storage bridge 104 provides a bridging function between a storage device and an initiator. For example, STP storage bridge 104 may be configured to connect to an STP initiator bridge (e.g., STP initiator bridge A 102A, STP initiator bridge N 102N, etc.) in response to an STP connection request and then receive SATA protocol from the STP initiator bridge.

Storage management module 106 may configure STP storage bridge 104 with operating parameters. Specifically, storage management module 106 may define a lookup table for STP storage bridge 104, where each record in the lookup table includes a SAS address to identify an initiator (i.e., a record for each SAS address assigned to an initiator by the initiator management module 103) that is associated with a drive slice of a storage device connected to STP storage bridge 104. The initiator may be associated with the drive slice by an offset value that is included in each record of the lookup table, where the offset value corresponds to the starting address of the drive slice in the storage device. The lookup table allows the STP storage bridge to process SATA requests received from the STP initiator bridges (e.g., STP initiator bridge A 102A, STP initiator bridge N 102N, etc.) by offsetting LBA addresses in the SATA requests based on an offset value from a relevant record in the lookup table, where the offset LBA address is directed at the drive slice associated with the initiator. At this stage, the storage device may then fulfill the SATA request using the offset LBA address.

Storage management module 106 may also provide a drive slice configuration to the STP storage bridge 104, which then uses the drive slice configuration to partition the storage device into drive slices for the initiators. The drive slice configuration may include parameters such as a quantity of drive slices, a size of each drive slice, a time share for an initiator assigned to each drive slice, etc. The time share of an initiator may be the portion of time allotted to fulfill SATA requests from the initiator. In this example, multiple initiators are sharing access to the same storage device, and the STP storage bridge 104 may schedule access for each of the initiators using a scheduling algorithm that accounts for the time share of each initiator.

In some cases, the management modules (e.g., initiator management module 103, storage management module 106) may include interfaces to allow users, such as system administrators of expander device 100, to specify or modify operating parameters. The interfaces may allow the system administrator to access the operating parameters using an electronic device, such as a personal computer, with a user interface for configuring the management modules. For example, an interface may allow a system administrator to specify the SAS address and target address that should be assigned to each initiator at a corresponding initiator bridge (e.g., STP initiator bridge A 102A, STP initiator bridge N 102N, etc.) by initiator management module 103. In another example, an interface may allow a system administrator to specify drive slice parameters, time share parameters for each initiator, and an initiator lookup table that should be assigned to STP storage bridge 104 by storage management module 106.

Each of the modules described above may be implemented to be executed on a processor with one or more central processing units (CPUs), microprocessors, and/or other hardware devices suitable for retrieval and execution of instructions stored in a machine-readable storage medium. As an alternative or in addition to retrieving and executing instructions, the processor may include one or more electronic circuits comprising a number of electronic components for performing the functionality of one or more of the instructions.

The machine-readable storage medium may be any electronic, magnetic, optical, or other physical storage device that stores executable instructions. Thus, the machine-readable storage medium may be, for example, Random Access Memory (RAM), an Electrically-Erasable Programmable Read-Only Memory (EEPROM), a storage drive, an optical disc, and the like.

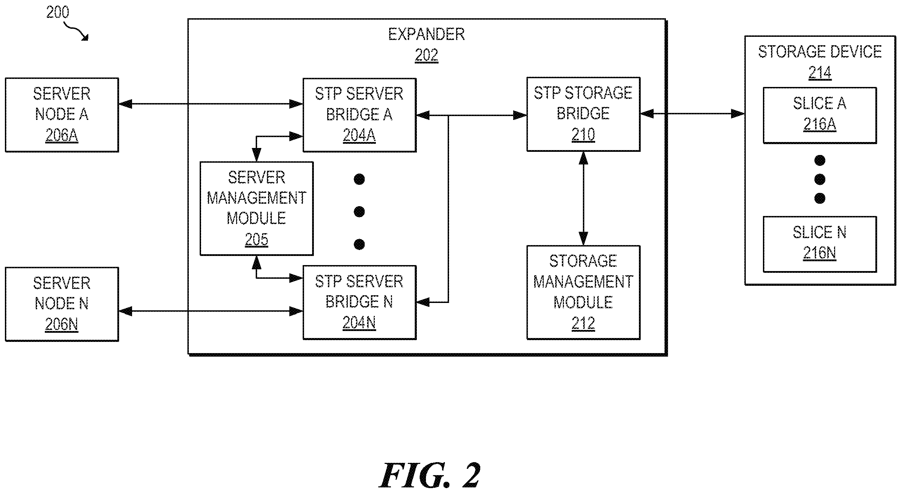

FIG. 2 is a block diagram of an example system 200 including an expander 202 for providing SATA initiator addressing and storage device slicing. As with expander device 100 of FIG. 1, expander 202 may be implemented on any electronic device suitable for providing SATA initiator addressing and storage device slicing. The components of expander 202 may be similar to the corresponding components of expander device 100 described with respect to FIG. 1.

STP server bridges (e.g., STP server bridge A 204A, STP server bridge N 204N, etc.) are configured to provide a bridging function between associated server nodes (e.g., server node A 206A, server node N 206N, etc.) and STP storage bridge 210, thereby facilitating communication with storage device 214. Each of the STP server bridges (e.g., STP server bridge A 204A, STP server bridge N 204N, etc.) may be configured by server management module 205 to assign a SAS address to and associate a target address of STP storage bridge 210 with each of the server nodes (e.g., server node A 206A, server node N 206N, etc.). Once configured, the STP server bridges (e.g., STP server bridge A 204A, STP server bridge N 204N, etc.) may inject the SAS address into SATA protocol received from their respective server node (e.g., server node A 206A, server node N 206N, etc.) before passing the SATA protocol to the STP storage bridge 210 at the target address.

Each of the server nodes (e.g., server node A 206A, server node N 206N, etc.) may include a processor with one or more central processing units (CPUs) and/or cores as well as associated memory. The server nodes (e.g., server node A 206A, server node N 206N, etc.) may execute instructions for system 200 to provide various computing functions (e.g., provide web services, process data, etc.). In this example, the server nodes (e.g., server node A 206A, server node N 206N, etc.) may share and use storage device 214 for long-term storage.

STP storage bridge 210 provides a bridging function between storage device 214 and the STP server bridges (e.g., STP server bridge A 204A, STP server bridge N 204N, etc.). Specifically, STP storage bridge 210 may be configured to connect to an STP server bridge (e.g., STP server bridge A 204A, STP server bridge N 204N, etc.) in response to an STP connection request and then process SATA requests from the server nodes (e.g., server node A 206A, server node N 206N, etc.). STP storage bridge 210 may process an SATA request by offsetting an LBA address in the SATA request based on an included SAS address that is assigned to the initiating server node (e.g., server node A 206A, server node N 206N, etc.). After offsetting the LBA address, STP storage bridge 210 may pass the SATA request to the storage device 214 with the offset LBA address.

STP storage bridge 210 may also be configured to partition storage device 214 into drive slices (e.g., slice A 216A, slice N 216N, etc.) as specified by storage management module 212. For example, storage management module 212 may specify a quantity of drive slices and a size for each drive slice, where each drive slice is assigned to a corresponding server node (e.g., server node A 206A, server node N 206N, etc.). A drive slice (e.g., slice A 216A, slice N 216N, etc.) of storage device 214 may be a logical storage unit. For example, a drive slice (e.g., slice A 216A, slice N 216N, etc.) may be a range of storage cylinders of a hard drive that are reserved for use by a corresponding server node (e.g., server node A 206A, server node N 206N, etc.).

Storage device 214 may be any hardware storage device for maintaining data accessible to the server nodes (e.g., server node A 206A, server node N 206N, etc.). For example, storage device 214 may include one or more hard disk drives, solid state drives, tape drives, and/or any other suitable storage devices.

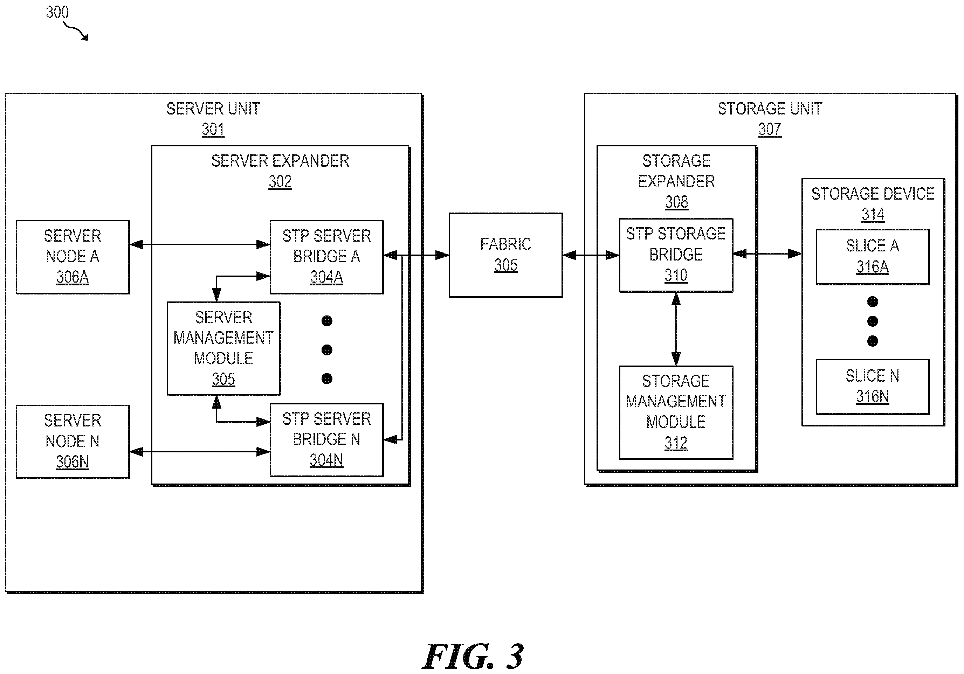

FIG. 3 is a block diagram of an example modular system 300 including expanders for providing SATA initiator addressing and storage device slicing. The components of the expanders may be similar to the corresponding components of expander device 100 described with respect to FIG. 1 or expander 202 described with respect to FIG. 2.

System 300 includes server unit 301 and storage unit 307. System 300 may be a modular system such as a rack server or a blade server, where server unit 301 and storage unit 307 can be easily removed from or installed in system 300. Server unit 301 may be a modular unit that provides processing for system 300, and storage unit 307 may be a module unit that provides storage for system 300. Any number of modular units may be installed in system 300 at a given time.

Each of the server unit 301 and the storage unit 307 has an expander, server expander 302 and storage expander 308 respectively, that are connected by fabric 305. Server expander 302 includes STP server bridges (e.g., STP server bridge A 304A, STP server bridge N 304N, etc.) that are configured to provide a bridging function between associated server nodes (e.g., server node A 306A, server node N 306N, etc.) and STP storage bridge 310 via fabric 305, thereby facilitating communication with storage device 314. Each of the STP server bridges (e.g., STP server bridge A 304A, STP server bridge N 304N, etc.) may be configured by server management module 305 to assign a SAS address to and associate a target address of STP storage bridge 310 with each of the server nodes (e.g., server node A 306A, server node N 306N, etc.). Once configured, the STP server bridges (e.g., STP server bridge A 304A, STP server bridge N 304N, etc.) may inject the associated SAS address into SATA protocol received from their respective server node (e.g., server node A 306A, server node N 306N, etc.) before passing the SATA protocol to the STP storage bridge 310 at the target address.

Storage expander 308 includes STP storage bridge 310 that provides a bridging function between storage device 314 and the STP server bridges (e.g., STP server bridge A 304A, STP server bridge N 304N, etc.). Specifically, STP storage bridge 310 may be configured to connect to an STP server bridge (e.g., STP server bridge A 304A, STP server bridge N 304N, etc.) in response to an STP connection request and then process SATA requests from the server nodes (e.g., server node A 306A, server node N 306N, etc.). STP storage bridge 310 may process an SATA request by offsetting an LBA address in the SATA request based on an included SAS address that is assigned to the originating server node (e.g., server node A 306A, server node N 306N, etc.). After offsetting the LBA address, STP storage bridge 310 may pass the SATA request to storage device 314 with the offset LBA address.

Fabric 305 provides communication paths that can comprise any means of providing communication between server unit 301 and storage unit 307 over fabric 305. For example, physical layers (PHYs) may be part of input/output modules of ports of server expander 302 and may include transmitters and receivers for communicating with transmitters and receivers of PHYs of storage expander 308. In fabric 305, PHYs represent physical communication structures that can be grouped as ports, which represent logical communication structures. The communication links can include communication medium which can comprise any physical means of providing electrical or optical communication such as fiber optic cable, copper cable, a suitable combination thereof and the like.

Fabric 305 is described as part of a data storage fabric such as SAS fabric architecture; however, other architectures such as Storage Area Networks (SAN) or Direct Attached Networks (DAN) may also be applicable. Storage device 314 is shown as being connected to storage expander 308, but storage device 314 can include a different number of and configuration of expanders than shown. Fabric 305 may include devices that have additional expanders which may include PHYs as part of ports of expanders. The PHYs can provide physical communication means and may include transmitters and receivers to allow communication with other PHYs of other devices coupled to fabric 305. The PHYs represent physical communication elements and can be grouped or organized as ports which may represent logical communication elements.

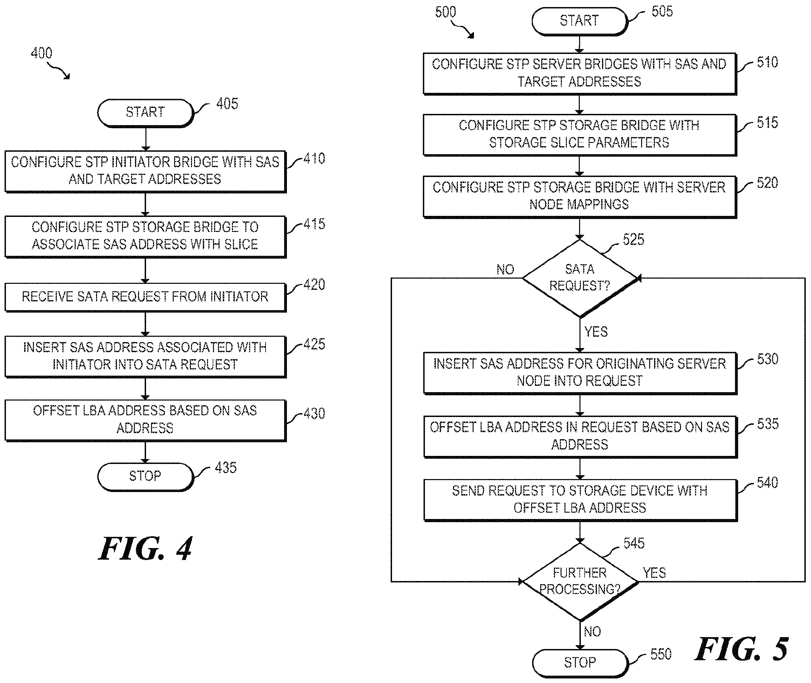

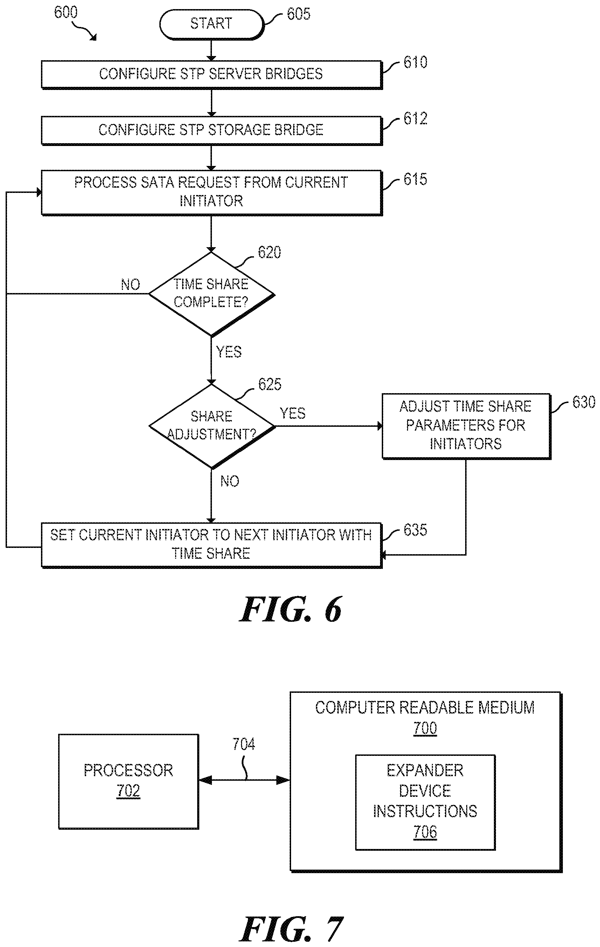

FIG. 4 is a flowchart of an example method 400 for execution by an expander device 100 for providing SATA initiator addressing and storage device slicing. Although execution of method 400 is described below with reference to expander device 100 of FIG. 1, other suitable devices for execution of method 400 may be used, such as expander 202 of FIG. 2 or server expander 302 and storage expander 308 of FIG. 3. Method 400 may be implemented in the form of executable instructions stored on a machine-readable storage medium, such as computer readable medium 700 of FIG. 7, and/or in the form of electronic circuitry.

Method 400 may start in block 405 and continue to block 410, where expander device 100 may configure an STP initiator bridge with SAS and target addresses. Specifically, a SAS address may be assigned to the initiator associated with the STP initiator bridge, and a target address of an STP storage bridge may be associated with the initiator. Next, in block 415, expander device 100 may configure an STP storage bridge to associate the SAS address with a drive slice of a storage device. For example, a record may be created in a lookup table that associates the SAS address with the drive slice by specifying an offset value. The offset value may correspond to the starting address of the drive slice in the storage device.

In block 420, a SATA request is received from the initiator. The SATA request may include a SATA command and an LBA address. Examples of SATA commands include a seek command, a read command, a write command, a copy command, an inquiry command, etc. In block 425, the SAS address associated with the initiator is inserted into the SATA request. Next, in block 430, the LBA address is offset based on the SAS address associated with the initiator. Specifically, the SAS address may be used to obtain an offset value from a lookup table, where the offset value is used to offset the LBA address. Method 400 may subsequently proceed to block 435, where method 400 may stop.

FIG. 5 is a flowchart of an example method 500 for execution by an expander 202 for providing storage device slicing and iterative SATA initiator addressing and processing. Although execution of method 500 is described below with reference to expander 202 of FIG. 2, other suitable devices for execution of method 500 may be used, such as expander device 100 of FIG. 1 or server expander 302 and storage expander 308 of FIG. 3. Method 500 may be implemented in the form of executable instructions stored on a machine-readable storage medium, such as computer readable medium 700 of FIG. 7, and/or in the form of electronic circuitry.

Method 500 may start in block 505 and continue to block 510, where expander 202 may configure STP server bridges with SAS and target addresses. Specifically, a SAS address may be assigned to each of the server node associated with a corresponding STP server bridge, and a target address of an STP storage bridge may be associated with each of the server nodes. A storage device connected to the STP storage bridge may be a shared storage resource of the server nodes. Next, in block 515, the STP storage bridge may be configured with storage slice parameters such a quantity of drive slices and a size of each drive slice. After being configured, the STP storage bridge may partition the storage device into drive slices according to the storage slice parameters.

In block 520, expander 202 may configure an STP storage bridge to associate each of the SAS addresses with a drive slice of the storage device. For example, records may be created in a lookup table that associate each SAS address with a drive slice by specifying an offset value for each SAS address. Each offset value may correspond to the starting address of a drive slice in the storage device.

In block 525, it is determined if a SATA request has been received from a server node. If a SATA request is not received from a server node, method 500 proceeds to block 545, where expander 202 determines if there is further processing to perform. If there is no further processing to perform, method 500 may proceed to block 550, where method 500 may stop. If there is further processing to perform, method 500 may return to block 525 to determine if another SATA request has been received.

If a SATA request has been received, the SAS address associated with the requesting server node is inserted into the SATA request in block 530. Next, in block 535, the LBA address is offset based on the SAS address associated with the requesting server node. Specifically, the SAS address may be used to obtain an offset value from a lookup table, where the offset value is used to offset the LBA address. In block 540, the SATA request with the offset LBA address is passed to the storage device. At this stage, the storage device may process the SATA request by performing the requested SATA command at the offset LBA address.

FIG. 6 is a flowchart of an example method 600 for execution by an expander 202 for providing SATA initiator time sharing of storage device slices. Although execution of method 600 is described below with reference to expander 202 of FIG. 2, other suitable devices for execution of method 600 may be used, such as expander device 100 of FIG. 1 or server expander 302 and storage expander 308 of FIG. 3. Method 600 may be implemented in the form of executable instructions stored on a machine-readable storage medium, such as computer readable medium 700 of FIG. 7, and/or in the form of electronic circuitry.

Method 600 may start in block 605 and continue to block 610, where expander 202 may configure STP server bridges. Specifically, a SAS address may be assigned to each of the server node associated with a corresponding STP server bridge, and a target address of an STP storage bridge may be associated with each of the server nodes. A storage device connected to the STP storage bridge may be a shared storage resource of the server nodes. Next, in block 612, expander 202 may configure the STP storage bridge. For example, expander 202 may set storage slice parameters and create a SAS address lookup table in the STP storage bridge. Further, expander 202 may set initial time share parameters for each of the initiators in the STP storage bridge.

In block 615, expander 202 may process a SATA request from a current initiator. The current initiator may be the initiator that currently has priority with the STP storage bridge because the current initiator's time share is active. In some cases, SATA requests may be processed as discussed above with respect to blocks 530-540 of FIG. of FIG. 5. In other cases if a SATA request from an initiator includes an inquiry command for storage parameters, the SATA may be processed by the STP storage bridge by returning storage parameters that describe a drive slice associated with the initiator as if the drive slice were a distinct storage device. In other words, the initiator is unaware that it is accessing a partition of a shared storage device. Storage parameters provided by the STP storage bridge may include a storage device type (e.g., magnetic disk, magnetic tape, optical drive device, etc.), a size of the drive slice, support for various addressing modes, a human-readable description of the drive slice, etc. Next, in block 620, it is determined if the time share of the current initiator is complete. If the time share is not complete, method 600 returns to block 615, where expander 202 continues to process SATA requests from the current initiator.

If the time share is complete, it is determined if time share adjustments should be made in block 625. The determination may be made based on the performance requirements of the initiators, which may be calculated by measuring runtime (i.e., during operation of expander 202) performance metrics of each initiator. Performance metrics may include, for example, the number of command timeouts (i.e., time shares with no command activity) and the number of commands during each time share of an initiator. An initiator that has a large number of command timeouts during its time shares may be a candidate for having its time share reduced. Conversely, an initiator that has a large number of commands during its time shares may be a candidate for having its time share increased.

If it is determined that a time share adjustment should be made, the time share parameters for the initiators may be adjusted in block 630. For example, an initiator with a large number of commands during its time share may receive an increased time share while an initiator with a large number of command timeouts during its time shares may receive a decreased time share. If it is determined that a time share adjustment should not be made, the current initiator may be set to the next initiator with a time share in block 635. At this stage, method 600 may return to block 615, where expander may process SATA requests from the next initiator.

FIG. 7 is an example block diagram showing a non-transitory, computer-readable medium that stores code for operating a storage device to provide SATA initiator addressing and storage device slicing. The non-transitory, computer-readable medium is generally referred to by the reference number 700 and may be included in expander device described in relation to FIG. 1. The non-transitory, computer-readable medium 700 may correspond to any typical storage device that stores computer-implemented instructions, such as programming code or the like. For example, the non-transitory, computer-readable medium 700 may include one or more of a non-volatile memory, a volatile memory, and/or one or more storage devices. Examples of non-volatile memory include, but are not limited to, electrically erasable programmable read only memory (EEPROM) and read only memory (ROM). Examples of volatile memory include, but are not limited to, static random access memory (SRAM), and dynamic random access memory (DRAM). Examples of storage devices include, but are not limited to, hard disk drives, compact disc drives, digital versatile disc drives, optical drives, solid state drives and flash memory devices.

A processor 702 generally retrieves and executes the instructions stored in the non-transitory, computer-readable medium 700 to operate the storage device in accordance with an example. In an example, the tangible, machine-readable medium 700 can be accessed by the processor 702 over a bus 704. A first region 706 of the non-transitory, computer-readable medium 700 may include functionality to implement expander device as described herein.

Although shown as contiguous blocks, the software components can be stored in any order or configuration. For example, if the non-transitory, computer-readable medium 700 is a hard drive, the software components can be stored in non-contiguous, or even overlapping, sectors.

The foregoing disclosure describes a number of example embodiments for providing SATA initiator addressing and storage device slicing. In this manner, the embodiments disclosed herein encapsulate SATA initiator addressing in an expander device that routes SATA requests from multiple initiators to drive slices of a single target device.

## Claims

1. A serial attached small computer system interface (SAS) expander device, comprising:
an initiator management module (103) to configure an initiator SAS address to uniquely identify a serial advanced technology attachment (SATA) initiator, wherein the SATA initiator is associated with a target address of a SATA tunneled protocol (STP) storage bridge (104);
an STP initiator bridge (102) to:
receive a SATA request from the SATA initiator, wherein the SATA request comprises a SATA command and a logical block addressing (LBA) address; and
send, after inserting the initiator SAS address into the SATA request, an STP connection request to the target address;
a storage management module (106) to configure the STP storage bridge to associate the initiator SAS address with a drive slice of a plurality of drive slices of an SATA storage device; and
the STP storage bridge to offset the LBA address based on the initiator SAS address to obtain an offset LBA address of the SATA storage device.

2. The expander device of claim 1, wherein the STP storage bridge is further to:
partition the SATA storage device to obtain the plurality of drive slices, wherein each of the plurality of drive slices is assigned to one of a plurality of SATA initiators.

3. The expander device of claim 1, wherein the STP storage bridge is further to:
send the SATA command and the offset LBA address to the SATA storage device.

4. The expander device of claim 1, further comprising a server expander and a storage expander, wherein the initiator management module and the STP initiator bridge is comprised by the server expander, and wherein the storage management module and the STP storage bridge are comprised by the storage expander.

5. The expander device of claim 1, wherein the STP storage bridge is further to:
receive a SATA inquiry request from the STP initiator bridge for storage parameters associated with the SATA initiator, where the SATA inquiry request was received by the STP initiator bridge from the SATA initiator; and
transmit the storage parameters that describe the drive slice of the plurality of drive slices as a distinct storage device.

6. The expander device of claim 1, wherein the storage management module is further to:
configure the STP storage bridge to provide a predetermined time share for the SATA initiator.

7. The expander device of claim 6, wherein the STP storage bridge is further to:
detect performance requirements of the SATA initiator during operation of the expander device; and
modify the predetermined time share based on the performance requirements to obtain a modified time share.

8. The expander device of claim 7, wherein the performance requirements comprise at least one requirement of a group selected from maximum number of commands, maximum amount of execution time, and command timeout.

9. A method for providing serial advanced technology attachment (SATA) initiator addressing and storage device slicing, comprising:
configuring an initiator serial attached small computer system interface (SAS) address to uniquely identify a SATA initiator, wherein the SATA initiator is associated with a target address of a SATA tunneled protocol (STP) storage bridge;
partitioning an SATA storage device to obtain a plurality of drive slices, wherein the initiator SAS address is associated with a drive slice of the plurality of drive slices;
receiving (420) a SATA request from the SATA initiator, wherein the SATA request comprises a SATA command and a logical block addressing (LBA) address;
after inserting (425) the initiator SAS address into the SATA request, sending a SATA tunneling protocol (STP) connection request to the target address; and
offsetting (430) the LBA address based on the initiator SAS address to obtain an offset LBA address of the SATA storage device.

10. The method of claim 9, further comprising:
sending the SATA command and the offset LBA address to the SATA storage device.

11. The method of claim 9, further comprising:
receiving a SATA inquiry request from the STP initiator bridge for storage parameters associated with the SATA initiator; and
transmitting the storage parameters that describe the drive slice of the plurality of drive slices as a distinct storage device.

12. The method of claim 9, further comprising:
configuring the STP storage bridge to provide a predetermined time share for the SATA initiator;
detecting runtime performance requirements of the SATA initiator; and
modifying the predetermined time share based on the runtime performance requirements to obtain a modified time share.

13. A non-transitory, computer-readable medium encoded with instructions executable by a processor, the machine-readable storage medium comprising:
instructions to configure an initiator serial attached small computer system interface (SAS) address to uniquely identify a serial advanced technology attachment (SATA) initiator, wherein the SATA initiator is associated with a target address of a SATA tunneled protocol (STP) storage bridge;
instructions to partition an SATA storage device to obtain a plurality of drive slices, wherein the initiator SAS address is associated with a drive slice of the plurality of drive slices;
instructions to receive a SATA request from the SATA initiator, wherein the SATA request comprises a SATA command and a logical block addressing (LBA) address;
instructions to send, after inserting the initiator SAS address into the SATA request, a SATA tunneling protocl (STP) connection request to the target address; and
instructions to offset the LBA address based on the initiator SAS address to obtain an offset LBA address of the SATA storage device.

14. The computer-readable medium of claim 13, further comprising instructions to:
receive a SATA inquiry request from the STP initiator bridge for storage parameters associated with the SATA initiator; and
transmit the storage parameters that describe the drive slice of the plurality of drive slices as a distinct storage device.

15. The computer-readable medium of claim 13, further comprising instructions to:
configure the STP storage bridge to provide a predetermined time share for the SATA initiator;
detect runtime performance requirements of the SATA initiator; and
modify the predetermined time share based on the runtime performance requirements to obtain a modified time share.

## Patentansprüche

1. Serial-Attached-Small-Computer-System-Interface(SAS)-Erweiterungseinrichtung, die Folgendes umfasst:
ein Initiatormanagementmodul (103), um eine Initiator-SAS-Adresse so zu konfigurieren, dass sie einen Serial-Advanced-Technology-Attachment(SATA)-Initiator eindeutig identifiziert, wobei der SATA-Initiator mit einer Zieladresse einer SATA-Tunneled-Protocol(STP)-Speicherbrücke (104) verknüpft ist;
eine STP-Initiatorbrücke (102), die zu Folgendem dient:
eine SATA-Anforderung von dem SATA-Initiator zu empfangen, wobei die SATA-Anforderung einen SATA-Befehl und eine Adresse für Logische Blockadressierung (LBA) umfasst; und
nach dem Einsetzen der Initiator-SAS-Adresse in die SATA-Anforderung eine STP-Verbindungsanforderung an die Zieladresse zu senden;
ein Speichermanagementmodul (106), um die STP-Speicherbrücke so zu konfigurieren, dass sie die Initiator-SAS-Adresse mit einer Laufwerksscheibe von mehreren Laufwerksscheiben eines SATA-Speichergeräts verknüpft; und
die STP-Speicherbrücke, um die LBA-Adresse auf der Grundlage der Initiator-SAS-Adresse zu versetzen, um eine versetzte LBA-Adresse des SATA-Speichergeräts zu erhalten.

2. Erweiterungseinrichtung nach Anspruch 1, wobei die STP-Speicherbrücke ferner zu Folgendem dient:
das SATA-Speichergerät zu partitionieren, um die mehreren Laufwerksscheiben zu erhalten, wobei jede der mehreren Laufwerksscheiben einem von mehreren SATA-Initiatoren zugewiesen wird.

3. Erweiterungseinrichtung nach Anspruch 1, wobei die STP-Speicherbrücke ferner zu Folgendem dient:
den SATA-Befehl und die versetzte LBA-Adresse an das SATA-Speichergerät zu senden.

4. Erweiterungseinrichtung nach Anspruch 1, die ferner eine Servererweiterung und eine Speichererweiterung umfasst, wobei das Initiatormanagementmodul und die STP-Initiatorbrücke durch die Servererweiterung umfasst werden und wobei das Speichermanagementmodul und die STP-Speicherbrücke durch die Speichererweiterung umfasst werden.

5. Erweiterungseinrichtung nach Anspruch 1, wobei die STP-Speicherbrücke ferner zu Folgendem dient:
eine SATA-Abfrageanforderung von der STP-Initiatorbrücke nach Speicherparametern, die mit dem SATA-Initiator verknüpft sind, zu empfangen, wobei die SATA-Abfrageanforderung durch die STP-Initiatorbrücke von dem SATA-Initiator empfangen wurde; und
die Speicherparameter, welche die Laufwerksscheibe von den mehreren Laufwerksscheiben beschreiben, als ein gesondertes Speichergerät zu übermitteln.

6. Erweiterungseinrichtung nach Anspruch 1, wobei das Speichermanagementmodul ferner zu Folgendem dient:
die STP-Speicherbrücke so zu konfigurieren, dass sie einen vorbestimmten Zeitanteil für den SATA-Initiator bereitstellt.

7. Erweiterungseinrichtung nach Anspruch 6, wobei die STP-Speicherbrücke ferner zu Folgendem dient:
Leistungsanforderungen des SATA-Initiators während des Betriebs der Erweiterungseinrichtung zu erfassen und
den vorbestimmten Zeitanteil auf der Grundlage der Leistungsanforderungen zu modifizieren, um einen modifizierten Zeitanteil zu erhalten.

8. Erweiterungseinrichtung nach Anspruch 7, wobei die Leistungsanforderungen wenigstens eine Anforderung von einer Gruppe umfassen, die ausgewählt ist aus einer maximalen Anzahl von Befehlen, einem maximalen Maß der Ausführungszeit und Befehlszeitüberschreitung.

9. Verfahren zum Bereitstellen von Serial-Advanced-Technology-Attachment(SATA)-Initiatoradressierung und Speichergerätunterteilung, das Folgendes umfasst:
ein Konfigurieren einer Initiator-Serial-Attached-Small-Computer-System-Interface(SAS)-Adresse, so dass sie einen SATA-Initiator eindeutig identifiziert, wobei der SATA-Initiator mit einer Zieladresse einer SATA-Tunneled-Protocol(STP)-Speicherbrücke verknüpft ist;
ein Partitionieren eines SATA-Speichergeräts, um mehrere Laufwerksscheiben zu erhalten, wobei die Initiator-SAS-Adresse mit einer Laufwerksscheibe von den mehreren Laufwerksscheiben verknüpft ist;
ein Empfangen (420) einer SATA-Anforderung von dem SATA-Initiator, wobei die SATA-Anforderung einen SATA-Befehl und eine Adresse für Logische Blockadressierung (LBA) umfasst;
nach dem Einsetzen (425) der Initiator-SAS-Adresse in die SATA-Anforderung ein Senden einer SATA-Tunneled-Protocol(STP)-Verbindungsanforderung an die Zieladresse und
ein Versetzen (430) der LBA-Adresse auf der Grundlage der Initiator-SAS-Adresse, um eine versetzte LBA-Adresse des SATA-Speichergeräts zu erhalten.

10. Verfahren nach Anspruch 9, das ferner Folgendes umfasst:
ein Senden des SATA-Befehls und der versetzten LBA-Adresse an das SATA-Speichergerät.

11. Verfahren nach Anspruch 9, das ferner Folgendes umfasst:
ein Empfangen einer SATA-Abfrageanforderung von der STP-Initiatorbrücke nach Speicherparametern, die mit dem SATA-Initiator verknüpft sind; und
ein Übermitteln der Speicherparameter, welche die Laufwerksscheibe von den mehreren Laufwerksscheiben beschreiben, als ein gesondertes Speichergerät.

12. Verfahren nach Anspruch 9, das ferner Folgendes umfasst:
ein Konfigurieren der STP-Speicherbrücke, so dass sie einen vorbestimmten Zeitanteil für den SATA-Initiator bereitstellt;
ein Erfassen der Laufzeit-Leistungsanforderungen des SATA-Initiators und
ein Modifizieren des vorbestimmten Zeitanteils auf der Grundlage der Laufzeit-Leistungsanforderungen, um einen modifizierten Zeitanteil zu erhalten.

13. Nichtflüchtiges, rechnerlesbares Medium, das mit Anweisungen codiert ist, die durch einen Prozessor ausführbar sind, wobei das maschinenlesbare Speichermedium Folgendes umfasst:
Anweisungen, um eine Initiator-Serial-Attached-Small-Computer-System-Interface(SAS)-Adresse so zu konfigurieren, dass sie einen Serial-Advanced-Technology-Attachment(SATA)-Initiator eindeutig identifiziert, wobei der SATA-Initiator mit einer Zieladresse einer SATA-Tunneled-Protocol(STP)-Speicherbrücke verknüpft ist;
Anweisungen, um ein SATA-Speichergerät zu partitionieren, um mehrere Laufwerksscheiben zu erhalten, wobei die Initiator-SAS-Adresse mit einer Laufwerksscheibe von den mehreren Laufwerksscheiben verknüpft ist;
Anweisungen, um eine SATA-Anforderung von dem SATA-Initiator zu empfangen, wobei die SATA-Anforderung einen SATA-Befehl und eine Adresse für Logische Blockadressierung (LBA) umfasst;
Anweisungen, um nach dem Einsetzen der Initiator-SAS-Adresse in die SATA-Anforderung eine SATA-Tunneled-Protocol(STP)-Verbindungsanforderung an die Zieladresse zu senden; und
Anweisungen, um die LBA-Adresse auf der Grundlage der Initiator-SAS-Adresse zu versetzen, um eine versetzte LBA-Adresse des SATA-Speichergeräts zu erhalten.

14. Rechnerlesbares Medium nach Anspruch 13, das ferner Anweisungen zu Folgendem umfasst:
eine SATA-Abfrageanforderung von der STP-Initiatorbrücke nach Speicherparametern, die mit dem SATA-Initiator verknüpft sind, zu empfangen und
die Speicherparameter, welche die Laufwerksscheibe von den mehreren Laufwerksscheiben beschreiben, als ein gesondertes Speichergerät zu übermitteln.

15. Rechnerlesbares Medium nach Anspruch 13, das ferner Anweisungen zu Folgendem umfasst:
die STP-Speicherbrücke so zu konfigurieren, dass sie einen vorbestimmten Zeitanteil für den SATA-Initiator bereitstellt;
Laufzeit-Leistungsanforderungen des SATA-Initiators zu erfassen und
den vorbestimmten Zeitanteil auf der Grundlage der Laufzeit-Leistungsanforderungen zu modifizieren, um einen modifizierten Zeitanteil zu erhalten.

## Revendications

1. Dispositif d'extension d'interface de système informatique à petite échelle attaché en série (SAS), comprenant :
un module de gestion d'initiateur (103) pour configurer une adresse SAS d'initiateur pour identifier de manière unique un initiateur d'attachement de technologie de pointe en série (SATA), dans lequel l'initiateur SATA est associé avec une adresse cible d'un pont de stockage (104) de protocole de tunnel SATA (STP) ;
un pont d'initiateur SATA (102) ; pour :
recevoir une demande SATA de l'initiateur SATA, dans lequel la demande SATA comprend une commande SATA et une adresse d'adressage de bloc logique (LBA) ; et
envoyer, après avoir inséré l'adresse SAS de l'initiateur dans la requête SATA, une demande de connexion STP à l'adresse cible ;
un module de gestion de stockage (106) pour configurer le pont de stockage STP pour associer l'adresse SAS d'initiateur avec une tranche de lecteur d'une pluralité de tranches de lecteur d'un dispositif de stockage SATA ; et
le pont de stockage STP pour compenser l'adresse LBA basée sur l'adresse SAS d'initiateur pour obtenir une adresse LBA compensée du dispositif de stockage SATA.

2. Dispositif d'extension selon la revendication 1, dans lequel le pont de stockage STP sert en outre à :
partitionner le dispositif de stockage SATA pour obtenir la pluralité de tranches de lecteur, dans lequel chacune de la pluralité de tranches de lecteur est attribuée à l'un d'une pluralité d'initiateurs SATA.

3. Dispositif d'extension selon la revendication 1, dans lequel le pont de stockage STP sert en outre à :
envoyer la commande SATA et l'adresse LBA compensée au dispositif de stockage SATA.

4. Dispositif d'extension selon la revendication 1, comprenant en outre un extenseur de serveur et un extenseur de stockage, dans lequel le module de gestion d'initiateur et le pont d'initiateur STP sont compris dans l'extenseur de serveur, et dans lequel le module de gestion de stockage et le pont de stockage STP sont compris dans l'extenseur de stockage.

5. Dispositif d'extension selon la revendication 1, dans lequel le pont de stockage STP sert en outre à :
recevoir une demande de renseignements SATA du pont d'initiateur STP pour des paramètres de stockage associés à l'initiateur SATA, où la demande de renseignements SATA a été reçue par le pont d'initiateur STP à partir de l'initiateur SATA ; et
transmettre les paramètres de stockage qui décrivent la tranche de lecteur de la pluralité de tranches de lecteur en tant que dispositif de stockage distinct.

6. Dispositif d'extension selon la revendication 1, dans lequel le module de gestion de stockage sert en outre à :
configurer le pont de stockage STP pour fournir une tranche de temps prédéterminée pour l'initiateur SATA.

7. Dispositif d'extension selon la revendication 6, dans lequel le pont de stockage STP sert en outre à :
détecter les exigences de performance de l'initiateur SATA pendant le fonctionnement du dispositif d'extension ; et
modifier la tranche de temps prédéterminée en fonction des exigences de performance pour obtenir une tranche de temps modifiée.

8. Dispositif d'extension selon la revendication 7, dans lequel les exigences de performance comprennent au moins une exigence d'un groupe sélectionné parmi le nombre maximum de commandes, la durée maximale du temps d'exécution et le délai d'attente de commande.

9. Procédé pour fournir un adressage d'initiateur d'attachement de technologie de pointe en série (SATA) et le découpage de dispositif de stockage, comprenant :
configurer une adresse d'interface de système informatique à petite échelle attaché en série (SAS) d'initiateur pour identifier de manière unique un initiateur SATA, dans lequel l'initiateur SATA est associé avec une adresse cible d'un pont de stockage de protocole de tunnel SATA (STP) ;
partitionner un dispositif de stockage SATA pour obtenir une pluralité de tranches de lecteur, dans lequel l'adresse SAS d'initiateur est associée à une tranche de lecteur de la pluralité de tranches de lecteur ;
recevoir (420) une demande SATA de l'initiateur SATA, dans lequel la demande SATA comprend une commande SATA et une adresse d'adressage de bloc logique (LBA) ;
après avoir inséré (425) l'adresse SAS d'initiateur dans la demande SATA, envoyer une demande de connexion de protocole de tunnel SATA (STP) à l'adresse cible ; et
compenser (430) l'adresse LBA basée sur l'adresse SAS d'initiateur pour obtenir une adresse LBA compensée du dispositif de stockage SATA.

10. Procédé selon la revendication 9, comprenant en outre :
envoyer la commande SATA et l'adresse LBA compensée au dispositif de stockage SATA.

11. Procédé selon la revendication 9, comprenant en outre :
recevoir une demande de renseignements SATA du pont d'initiateur STP pour les paramètres de stockage associés à l'initiateur SATA ; et
transmettre les paramètres de stockage qui décrivent la tranche de lecteur de la pluralité de tranches de lecteur en tant que dispositif de stockage distinct.

12. Procédé selon la revendication 9, comprenant en outre :
configurer le pont de stockage STP pour fournir une tranche de temps prédéterminée pour l'initiateur SATA ;
détecter les exigences de performance d'exécution de l'initiateur SATA ; et
modifier la tranche de temps prédéterminée en fonction des exigences de performance d'exécution pour obtenir une tranche de temps modifiée.

13. Support non-transitoire, lisible par ordinateur, encodé avec des instructions exécutables par un processeur, le support de stockage lisible par une machine comprenant :
des instructions pour configurer une adresse d'interface de système informatique à petite échelle attaché en série (SAS) d'initiateur pour identifier de manière unique un initiateur d'attachement de technologie de pointe en série (SATA), dans lequel l'initiateur SATA est associé avec une adresse cible d'un pont de stockage de protocole de tunnel SATA (STP) ;
des instructions pour partitionner un dispositif de stockage SATA pour obtenir une pluralité de tranches de lecteur, dans lequel l'adresse SAS d'initiateur est associée à une tranche de lecteur de la pluralité de tranches de lecteur ;
des instructions pour recevoir une demande SATA de l'initiateur SATA, dans lequel la demande SATA comprend une commande SATA et une adresse d'adressage de bloc logique (LBA) ;
des instructions pour envoyer, après insertion de l'adresse SAS d'initiateur dans la demande SATA, une demande de connexion de protocole de tunnel SATA (STP) à l'adresse cible ; et
des instructions pour compenser l'adresse LBA basée sur l'adresse SAS d'initiateur pour obtenir une adresse LBA compensée du dispositif de stockage SATA.

14. Support lisible par ordinateur selon la revendication 13, comprenant en outre des instructions pour :
recevoir une demande de renseignements SATA du pont d'initiateur STP pour les paramètres de stockage associés à l'initiateur SATA ; et
transmettre les paramètres de stockage qui décrivent la tranche de lecteur de la pluralité de tranches de lecteur en tant que dispositif de stockage distinct.

15. Support lisible par ordinateur selon la revendication 13, comprenant en outre des instructions pour :
configurer le pont de stockage STP pour fournir une tranche de temps prédéterminée pour l'initiateur SATA ;
détecter les exigences de performance d'exécution de l'initiateur SATA ; et
modifier la tranche de temps prédéterminée en fonction des exigences de performance d'exécution pour obtenir une tranche de temps modifiée.
